# EUROPEAN PATENT APPLICATION

(11) **EP 3 018 578 A1**
(43) Date of publication of application: **11.05.2016**
(21) Application number: 15164814.4
(22) Date of filing: 23.04.2015
(51) Int. Cl.: G06F 9/44, G06F 3/14, G06Q 10/10

(54) **METHOD OF SYNCHRONISING MULTIMEDIA CONTENT ACROSS A PLURALITY OF DEVICES**

(30) Priority: 04.11.2014 GB 201419613
(71) Applicant: Displaynote Technologies Limited, Belfast, Northern Ireland BT3 9DT (GB)
(72) Inventor: Brown, Paul, County Down,, Northern Ireland BT22 2DY, (GB); Bell, Andrew, 30004, Murcia (ES); Feely, Alan, County Down, Northern Ireland BT20 4ET (GB)
(74) Representative: MacLachlan & Donaldson

(57) **Abstract**

The present invention relates to and system and method of synchronising multimedia content across a plurality of devices comprising steps of: allowing a multimedia document file to be viewed on display means of a first processing device; transmitting the multimedia document file to a second processing device for viewing on display means of one or more second processing devices; allowing the multimedia document file to be edited or modified at the first processing device; the method characterised by a step of: synchronising the view of the multimedia document file such that the edits or modifications to the multimedia document file performed at the first processing device appear in near real time automatically to the view of the multimedia document file at the second processing device. The present invention provides means for locking and synchronising the appearance of a document, comprising text and/or image content, on connected processing devices, allowing collaborative scrolling, zoom, co-editing, annotation and mark-up of the document by the devices.

## Description

The present invention relates to a method and system of synchronising multimedia content across a plurality of devices, in particular across a plurality of portable display devices.

Document rendering to provide collaboration on portable devices is well known. Touch displays are used in many electronic devices such as computers, tablet computers, and phones, to display content and provide a user interface through which a user may interact with on-screen content and collaborate with others.

With the increase of devices being used in the workplace, in schools and in colleges, electronic devices are being used to render and allow users to edit on-screen content such as documents, presentations and images. Mobile workers are using electronic devices to open emails and to review and change documents in an increasingly collaborative way. Online meetings are used every day whereby users are connecting and sharing content and documents.

Screen sharing technology has been used as a way for presenters to connect to their participants and share the content of their display with other users. This technology has been available in desktop applications and is increasingly being used in tablet and phone technology. Screen sharing technology uses a method of sharing the screen by means of capturing the screen image and transmitting it as an image or video stream to connected users, often resulting in low quality images or video caused by inadequate bandwidth.

Another problem associated with the use of screen sharing technology is the inability for a group of users to share and receive the actual file content on a portable electronic device. Receiving only an image or a video stream of the file content means that participants cannot easily work together to co-edit and mark-up a document in real time, ensuring that it is kept in its original file format.

Solutions do exist that have tried to address this problem by rendering a document within a web page, allowing users to co-edit and mark-up a document but in doing so requiring the mobile users to access a webpage or web view, often changing the file format of the original document. Furthermore, these methods fail to address the need to control the synchronised movement through a document whilst other users follow the presentation.

The requirement of synchronised movement of the document on each user device is essential to ensuring that each participant is not only on the same page as the presenter but also the right part of the page.

The aforementioned solutions have additional drawbacks in that each and every user who wants to co-edit a document in real time must have a user account associated to the webpage provider. Other solutions, used on portable electronic devices require the user to check a document out of a central storage repository, thus locking others from changing the document until the document is checked back into the central repository.

It is a therefore an object of the present invention to provide a method and system of synchronising multimedia content across a plurality of devices which goes at least some way toward addressing the above problems. More specifically, the invention may provide a more efficient, user friendly way to allow users to share actual documents in real time, from and to a plurality of portable electronic devices, giving them the ability to synchronise the movement of the document on each and every connecting device, allowing scrolling, zoom, co-editing, annotation and mark-up of the document whilst maintaining its original file format.

Further aspects of the present invention will become apparent form the ensuing description which is given by way of example only.

According to the invention, there is provided a method of synchronising multimedia content across a plurality of devices comprising steps of:
allowing a multimedia document file to be viewed on display means of a first processing device;
downloading the multimedia document file on a second processing device for viewing on display means of one or more second processing devices;
allowing the multimedia document file to be edited or modified at the first processing device;
the method characterised by a step of:
   synchronising the view of the multimedia document file such that the edits or modifications to the multimedia document file performed at the first processing device appear in near real time automatically to the view of the multimedia document file at the second processing device.

Preferably, the method comprises a further step of: transmitting a collaboration request to the or each second processing device, whereby the step of downloading the multimedia document file on a second processing device is performed when an acceptance of the collaboration request is received from the second processing device.

Preferably, the method comprises a further step of: locking the view of the multimedia document file such that the view of the multimedia document file displayed on display means of the second processing device corresponds identically with the view of the multimedia content on display means of the first processing device.

Preferably, the method comprises a further step of: allowing the multimedia document file to be modified or edited at the first processing device and simultaneously preventing the multimedia document file from being modified or edited at the second processing device.

Preferably, the method comprises a further step of: allowing zooming or scrolling of the view of the multimedia document file at the first processing device and simultaneously preventing zooming or scrolling of the view of the multimedia document file at the second processing device

Preferably, the method comprises a further step of: unlocking the view of the multimedia document file such that the view of the multimedia document file displayed on display means of the second processing device is independent of the view of the multimedia document file displayed on display means of the first processing device.

Preferably, when the view is unlocked, independent zooming or scrolling of the view of the multimedia document file by the first processing device and the second processing device is enabled.

Preferably, when the view is unlocked, independent editing or modification of the multimedia document file by the first processing device and the second processing device is provided and the view of the multimedia document file is synchronised such that the edits or modifications performed at each of the first processing device and the second processing device appear in near real time automatically to the view of the multimedia document file at the first and the second processing devices.

Preferably, the first processing devices performs the step of locking and unlocking the view of the multimedia document file.

Preferably, the method comprises a further step of: saving the edited or modified multimedia document file in one or more of: storage means of the first processing device, the second processing device and remote storage means.

Preferably, the method comprises a further step of: saving the edited or modified multimedia document file in storage means of the first processing device and preventing the edited or modified multimedia document file from being saved in storage means of the or each of second processing device.

Preferably, the first processing devices performs the step of preventing the edited or modified multimedia document file from being saved in storage means of the second processing devices.

Preferably, the method comprises a further step of: overlaying a device camera on the view of the editable multimedia document file on both the first processing device and the second processing device and providing a channel for a two-way video call between the first processing device and the second processing device during viewing, editing or modification of the multimedia document file.

Preferably, the multimedia document file has a file format, such that when the multimedia document file is modified or edited in any manner or saved the file format for the multimedia document file is at all times maintained across the devices. Such an original file format for the multimedia document file may be, by way of example only, a .docx (MS Word) format, a pptx (MS Powerpoint) format, a .jpg (Joint Photographic Experts Group) format or any other format as required.

Preferably, the multimedia document file comprises one or both of: image and text content which may be edited, modified and saved without changing the original file format. For example, an MS Word document may be opened, edited and saved in the original file format or structure across all devices.

According to the invention, there is provided a system for synchronising multimedia content across a plurality of devices comprising:
means for allowing a multimedia document file to be viewed on display means of a first processing device;
means for transmitting the multimedia document file to a second processing device for viewing on display means of one or more second processing devices;
means for allowing the multimedia document file to be edited or modified at the first processing device;
the system characterised by:
   means for synchronising the view of the multimedia document file such that the edits or modifications to the multimedia document file performed at the first processing device appear in near real time automatically at the view of the multimedia document file at the second processing device.

The invention will be more clearly understood from the following description of some embodiments thereof, given by way of example only, with reference to the accompanying drawings, in which:
Figure 1 is a flow diagram illustrating a preferred process according to the invention for inviting users to connect, synchronising the movement of a document on a plurality of portable devices, allowing scrolling, zoom, co-editing, annotation and mark-up of the document;
Figure 2 is a preferred graphical user interface (GUI) of the preferred invitation process according to the invention for a user to invite a single or plurality of users to work on a document together;
Figure 3 is a preferred graphical user interface for the synchronisation of movements within a document across a plurality of portable electronic devices;
Figure 4 is a preferred graphical user interface of unlocking portable devices, allowing each user on their portable electronic device to independently scroll, zoom, annotate and co-edit the document;
Figure 5 is a flow diagram showing steps in a process for ending a collaborative session according to the invention;
Figure 6 shows a graphical user interface for ending a collaborative session according to the invention;
Figure 7 shows a graphical user interface for video overlay functionality for a document according to the present invention;
Figure 8 is a flow diagram showing steps in a process for image sharing and editing of a document according to the present invention; and
Figure 9 shows a graphical user interface for sharing and editing a document according to the present invention.

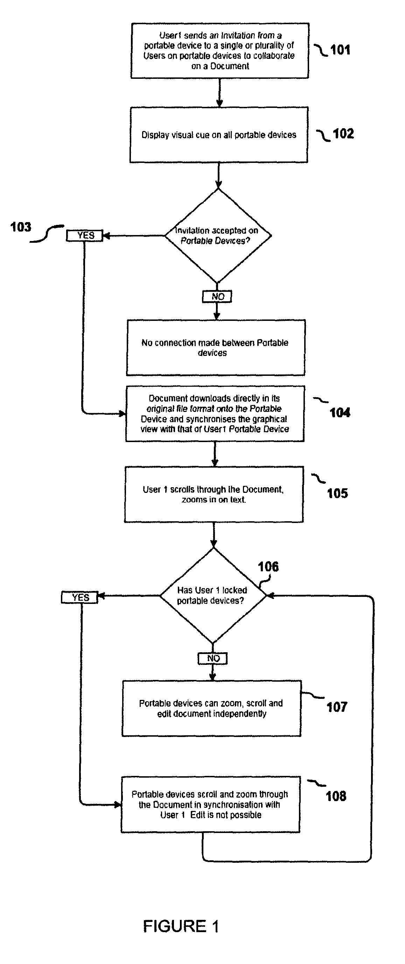

The present invention relates to a method and system for synchronising multimedia content across a plurality of devices, in particular across a plurality of portable display devices, which are understood to be computer processing devices with display means for displaying graphical content of a multimedia content file, such as text or image content. The method and system is implemented by one or more computer processors and memory comprising computer software program instructions executable by the one or more computer processor devices. The computer processors may be provided by a computer server or network of connected and/or distributed computers. In the Figures 1 to 9 shown, like reference numerals refer to corresponding parts throughout.

Referring to the drawings and initially to Figure 1, there is shown a preferred process according to the invention for inviting users to connect. This process locks and synchronises the movement of the document on each and every connecting device, allowing scrolling, zoom, co-editing, annotation and mark-up of the document.

Initially, a multimedia document file is viewed on display means of a first processing device, referred to as User1. The device User1 can send a request to collaborate on a multimedia document file to one or more other processing devices, from the GUI 101 executing on the first processing device User1. Each of the other processing devices will receive the invitation on their portable device by means of a graphical representation with the GUI on their own device 102. Upon acceptance of the invitation by the users 103 the other processing devices will join the collaborative session whereupon the document, in its original file format is downloaded on the connecting users' portable electronic device, displayed and synchronised with the display of User1 104. The method thus involves a step of transmitting a collaboration request to the or each second processing devices, and the step of transmitting the multimedia document file to those second processing devices is performed when an acceptance of the collaboration request is received from the or each second processing device.

User1 can move through the document by scrolling or using a zoom gesture on their portable device 105. The first processing device User1 performs a step of locking and unlocking the view of the multimedia document file. When other devices are locked by User1 106 any movements through the document are synchronised on each and every portable device, meaning that each device maintains the view of User1 by moving and scrolling through the document whilst disabling the ability for users of the second processing devices to edit the document 108. Locking the view of the multimedia document file thus ensures that the view of the multimedia document file displayed on display means of the other processing devices corresponds identically with the view of the multimedia content on display means of the first processing device User1. Edits or modifications made to the multimedia document file performed at the first processing device User1 will also appear in near real time automatically to the view of the multimedia document file at the second processing device.

The method also comprises a further step of unlocking the view of the multimedia document file such that the view of the multimedia document file displayed on display means of the other processing devices is independent of the view of the multimedia document file displayed on display means of the first processing device. Conversely, when User1 unlocks other users 106 each and every individual user can move around the document independently, meaning that they can zoom, scroll and edit the document without affecting the display of other users 107.

When the view is unlocked, independent zooming or scrolling of the view of the multimedia document file by the first processing device and the second processing device is enabled. When the view is unlocked, independent editing or modification of the multimedia document file by the first processing device and the other devices is provided and the view of the multimedia document file is synchronised such that the edits or modifications performed at each of the first processing device and the second processing device appear in near real time automatically to the view of the multimedia document file at the first and the second processing devices.

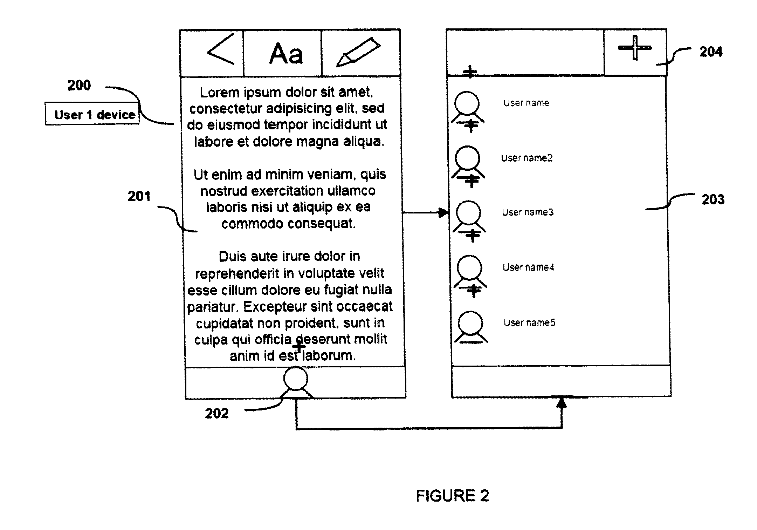

Figure 2 illustrates the GUI of the invitation process for a user to invite a single or plurality of users to work on a document together. User1 is able to download on his/her portable electronic device 200 a document in editable format without a change in the document file format 201. User1 can choose to send an invitation 202 to single or a plurality of users either before or during the editing of the document on the device. After selecting to invite other users, User1 is shown a GUI detailing a list of names that he/she can invite to collaborate on the document, 203. Multiple names can be selected from the list 204.

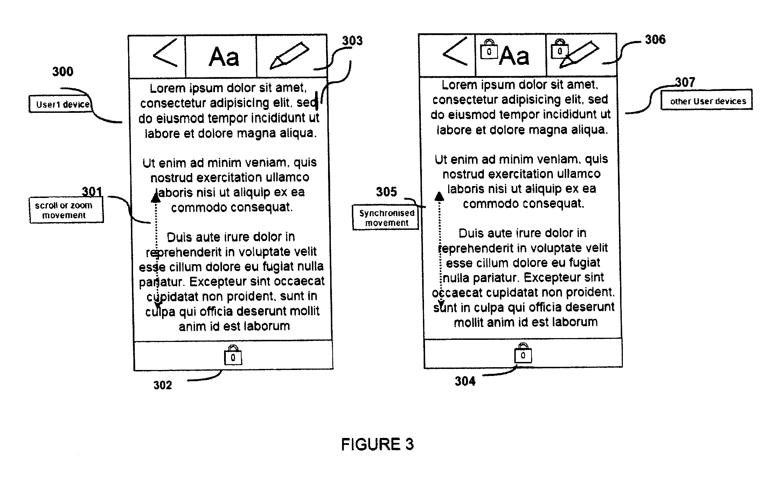

Figure 3 illustrates the GUI for the synchronisation of movements within a document across a plurality of portable devices when devices are locked to the view of the first processing device User1. User1 maintains control of the document on his/her device, 300. Upon acceptance of an invitation shared by User1, as detailed in Figure 1, other connecting User devices 307 will download the actual document which is on display on User1 device, 300. Other User devices 307 that join the document collaboration will render the document through the GUI in a synchronised view with User1. When User1 locks all other User devices 302 a lock symbol will appear on all other User devices 304 and prevent other User devices from moving, scrolling or editing the document, 306. When locked, 302,304 other User devices will be synchronised and follow the movements, scrolling, zooming of the document by User1 305. User1 maintains control, movement and editing privileges, including the ability to annotate directly into the document without changing the document file format 303.

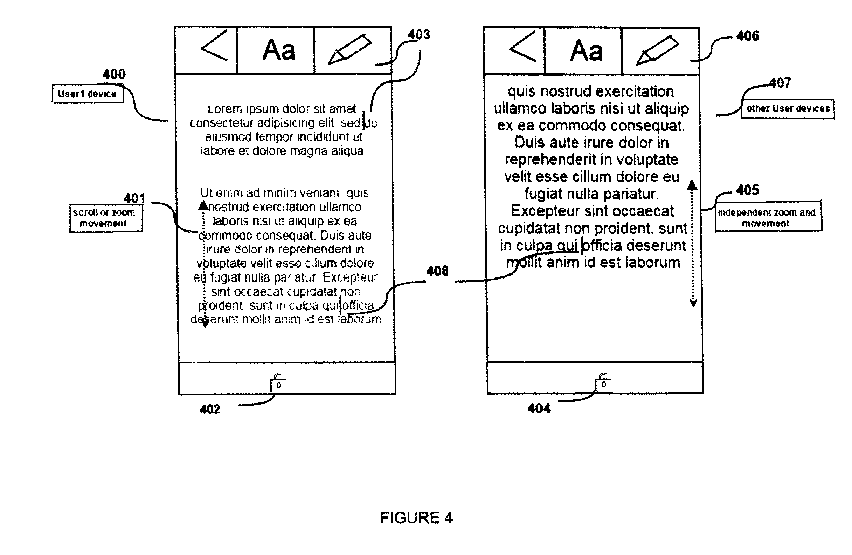

Figure 4 illustrates the GUI of unlocking portable devices, allowing each user on their portable device to independently scroll, zoom, annotate and co-edit the document. User1 maintains control of the document on his/her device, 400. When User1 unlocks 402 all other user devices 407 an unlock symbol will appear on all other user devices 404 allowing other User devices to independently move, scroll and zoom through the document 405. User1 and all other user devices have real time editing privileges, including the ability to annotate directly into the document without changing the original file format of the document 406. As other users edit the document the changes are shown in real time across all devices, including User1 device, 408.

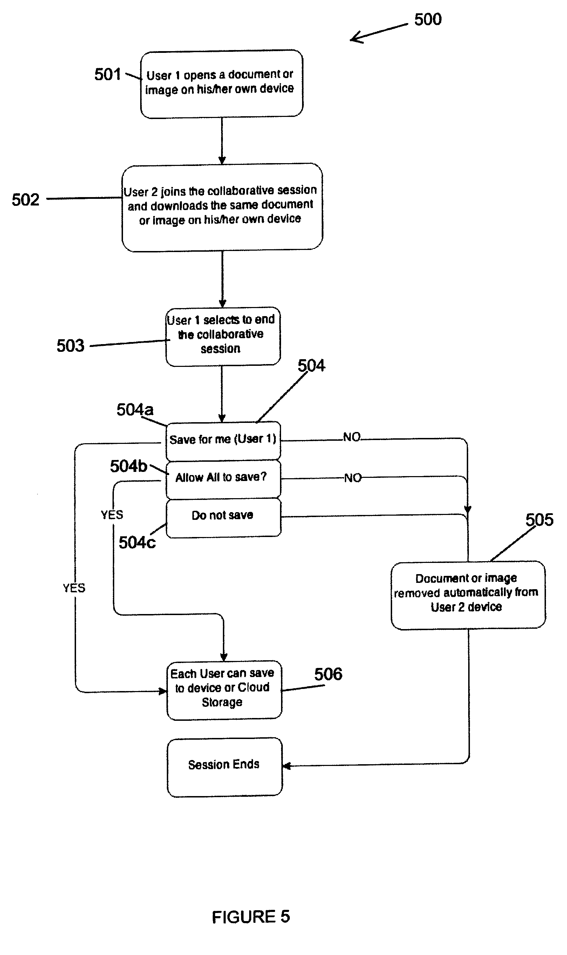

Figure 5 is a flow diagram showing steps in a process for ending a collaborative session according to the invention. This is the process for ending a collaborative session where a multimedia file, document or image has been shared between a plurality of users and devices. The flow diagram illustrates the ability for a first processing device User1 to decide if others processing devices (indicated as User2) can save the revised document to their device. If other users are not allowed to save the document or image, the document or image will be removed from the other device/s.

At step 501, a multimedia document file is rendered on display means of the first processing device User1. At step 502, a further processing device joins the collaborative session and downloads the multimedia document, which may be a document file comprising one or both or text and image content. At step 503, the first processing device User1 elects to end the collaborative session, and at step 504, is provided with options as to which devices may save the edited or otherwise modified document. At option step 504a, the document is saved just to the first processing device User1, and at option step 504b, the document is permitted to be saved by or at all of the other processing devices. At option step 504c, the document is not saved at any of the first or other devices and, at step 505, the document is instead removed or deleted from all of the devices. At step 506, when saving is permitted, the multimedia document file may be stored on storage means of respective first or second devices, or at remote storage means, such as cloud storage.

Accordingly, the present invention may enable saving the edited or modified multimedia document file in one or more of: storage means of the first processing device, the second processing device and remote storage means, such as a cloud based storage device. Alternatively, the multimedia document file may be saved in storage means of the first processing device and prevented from being saved in storage means of the or each of second processing device. The first processing device preferably performs the step of preventing the edited or modified multimedia document file from being saved in storage means of the or each of the second processing devices.

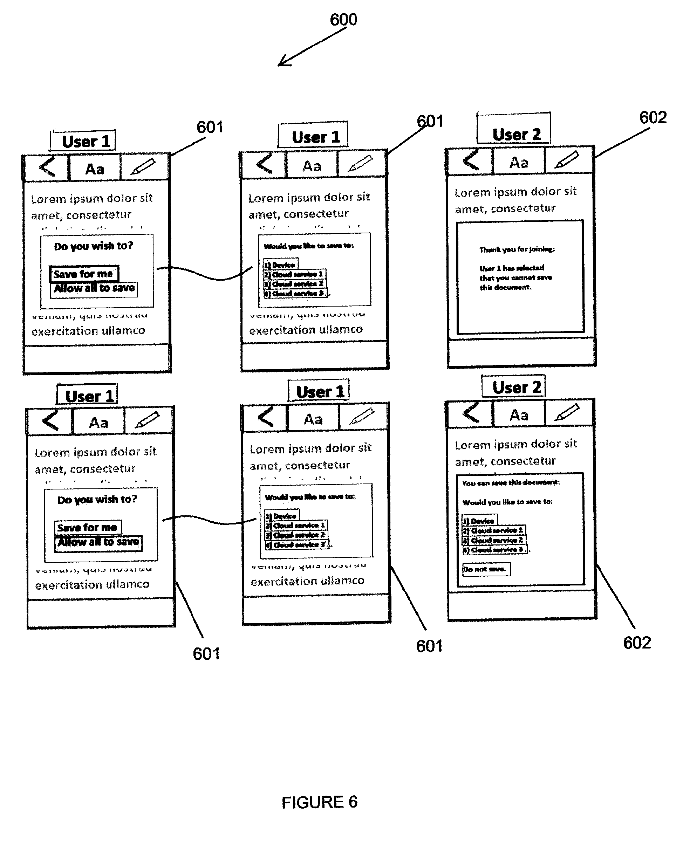

Figure 6 shows a graphical user interface 600 for ending a collaborative session according to the process described with respect to Figure 5, in which first processing device 601 communicates save options to a second or other processing device 602 for a multimedia document displayed on the display means of the devices 601, 602.

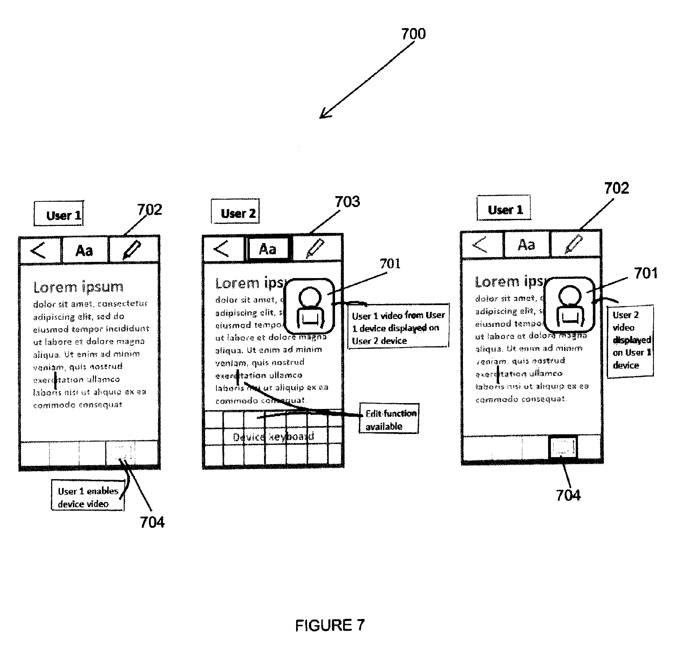

Figure 7 shows a graphical user interface 700 for video overlay functionality for a document according to the present invention. This feature allows a User of a processing dveice to enable the camera of the devcie for a video call whilst editing a document within a single application designed for use on a mobile phone or tablet computer. The unique aspect of this feature is that the document is not an image, but an actual editable multimedia document.

As shown in Figure 7, a device camera 701 is provided on the view of the multimedia document file on both the first processing device 702 and the second processing device 703. A channel for a two-way video call between the first processing device 702 and the or each second processing device 703 is provided during viewing, editing or modification of the multimedia document file appearing on display means of the devices 702, 703. A graphical display of an icon 704 is provided which when selected and de-selected generates the two-way video call between the processing devices 702, 703.

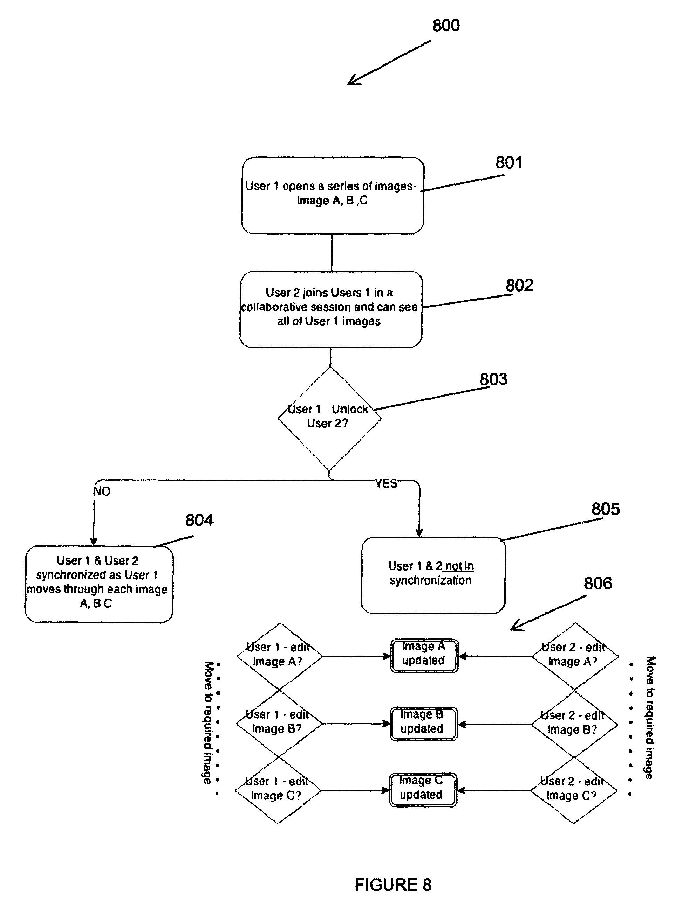

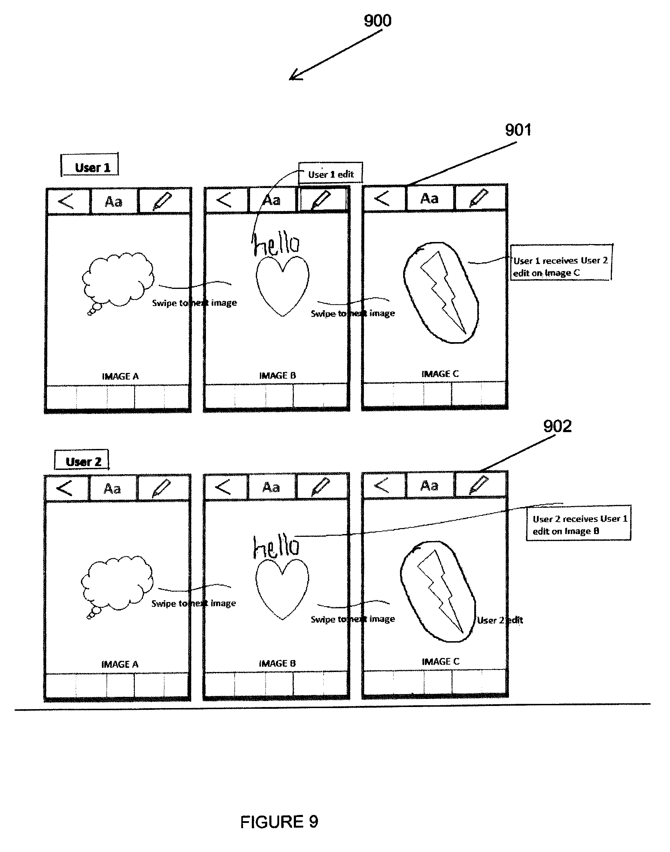

Figure 8 is a flow diagram 800 showing steps in a process for image sharing and editing of a document according to the present invention and Figure 9 shows a graphical user interface for sharing and editing a document.

As shown, a user can share a series of images in real time with other users. As shown in Figure 8, initially, at step 801 the first processing device User1 opens a series of images, and at step 802, the processing device User1 sequences through the series of images. At step 803, the first processing device User1 may either lock or unlock all connected further processing devices whereby, if locked, at step 804, the appearance of the images on display means of the further processing devices is in synchronisation with that of the first processing device User1. Conversely, at step 805, if the first processing device User1 unlocks other processing devices then the images may be moved through independently by the devices. As shown at step 806, any edits or modications that are made by the first processing device User1 and the other processing devices are then applied to the corresponding location within the corresponding image. Thereafter, as each user of the first processing device User1 and the other processing devices moves through the series of images, they will see the edits that have been made by users of the devices. Figure 9 shows synchronisation of the edits made to images displayed on display means of a first processing device 901 and second or further processing devices 902.

According to the present invention, all instances of a multimedia document file are synchronised via a core synchronisation engine operable to cache every multimedia document file change and user cursor selection and position, and to create differentials based on the updates from each user's device.

The core synchronisation engine stores these changes in historical order and validates all changes before sending the differential to each device. Changes are sent to the core synchronisation engine each time a user has finished editing or when they change their cursor position or selection within the copy of the document on their own device. When a differential arrives at a device the difference is applied to the existing document content on their own device.

To further describe the implementation of the present invention the following definitions will be used:

Document Synchronisation Core: is the means for synchronizing all changes made by users to a multimedia document file.

Range: A range is a section of any text content defined by two values, namely location & length, where location is an integer value that defines a text position in a multimedia document file, and length is an integer value that defines a number of covered characters from the location value.

User Range: Every user has a range that locates it inside a multimedia document file.

Document Content: Is the part of any multimedia document file that defines text content.

Content Range: Is the valid range to apply changes to Document Content. It starts at location 0 and its length is the text length (included non-visible chars).

Change: A change can be two types:

Text Content Change: Every change that inserts, delete or replace chars in Document Content.

Text Settings Change: Every settings that affects to Document Content without any modification.

Composing process: to concatenate change in order to save change communication.

The present invention includes a composing process or routine which starts every time a user modifies Document Content and where the composing process has not already launched.

During the composing process every modification of the Document Content is cached and added to composing variables making a temporal change state. When the composing process stops the composed change is sent to document synchronisation core.

The composing process can be stopped in two ways:

Writing time out: Composing process has a change detection timeout to detect when a user stops editing.

User position change: If a user changes position manually it is assumed that last composing process is finished.

To perform a Text Content Change the following values needed to be applied:
Change Type: Defines that is a Text Change.
User Range: Is the range a user started to modify.
Change Range: Is original Document Content affected range by the change.
Text Change: Is the content added by composed change.
Text: Is the basic character string added by the change. Can be empty.
Settings: Is a text settings list.

A Text Settings Change have following values:
Change Type: Define what setting is changed.
Change Range: Is original Document Content affected range by the change.
Setting Value: Is the content added by composed change.
Text: Is the basic character string added by the change. Can be empty.
Settings: Is a text settings list.

If modification is a Text Change received changes are applied directly to Document Content replacing text using: Change Range and Text Change. The change is applied by replacing text in Change range by new one.

If modification is a Text Setting Change this is applied using: Change Range and Setting Value. The change is applied by setting the right setting value in received change text range.

The Synchronisation Core Engine is a unique instance that manage all changes made to a Document and maintains synchronized contents of Users.

The Synchronisation Core Engine manages Document Revisions to store a history of changes. Every change received by Synchronisation Core Engine is: Managed for possible offsets and/or stored into history.

Every time a User joins or reconnects to a collaborative Document it tries to get last revision from the last revision it stores.

Synchronisation Core Engine sends the list of last changes to get last revision. Change notification process. Once a user make a change (composed or not) is sent to Synchronisation Core Engine.

Every time a change is validated by Synchronisation Core Engine, it is sent to every user to be applied into their Document Content.

Synchronisation Core Engine maintains active user cursor status, so using User Range information from received change, Synchronisation Core Engine knows the offset to be applied into Document Content if other changes is received previously. It is applied as a normal change using obtained offset.

Aspects of the present invention have been described by way of example only and it should be appreciate that additions and/or modifications may be made thereto without departing from the scope thereof as defined in the appended claims.

## Claims

1. A method of synchronising multimedia content across a plurality of devices comprising steps of:
allowing a multimedia document file to be viewed on display means of a first processing device;
downloading the multimedia document file on a second processing device for viewing on display means of one or more second processing devices;
allowing the multimedia document file to be edited or modified at the first processing device;
the method **characterised by** a step of:
synchronising the view of the multimedia document file such that the edits or modifications to the multimedia document file performed at the first processing device appear in near real time automatically to the view of the multimedia document file at the second processing device.

2. A method of synchronising multimedia content as claimed in Claim 1, comprising a further step of: transmitting a collaboration request to the or each second processing device, whereby the step of downloading the multimedia document file on a second processing device is performed when an acceptance of the collaboration request is received from the second processing device.

3. A method of synchronising multimedia content as claimed in Claim 1 or Claim 2, comprising a further step of: locking the view of the multimedia document file such that the view of the multimedia document file displayed on display means of the second processing device corresponds identically with the view of the multimedia content on display means of the first processing device.

4. A method of synchronising multimedia content as claimed in Claim 3, comprising a further step of: allowing the multimedia document file to be modified or edited at the first processing device and simultaneously preventing the multimedia document file from being modified or edited at the second processing device.

5. A method of synchronising multimedia content as claimed in Claim 3 or Claim 4, comprising a further step of: allowing zooming or scrolling of the view of the multimedia document file at the first processing device and simultaneously preventing zooming or scrolling of the view of the multimedia document file at the second processing device

6. A method of synchronising multimedia content as claimed in any one of the preceding claims, comprising a further step of: unlocking the view of the multimedia document file such that the view of the multimedia document file displayed on display means of the second processing device is independent of the view of the multimedia document file displayed on display means of the first processing device.

7. A method of synchronising multimedia content as claimed in Claim 6, comprising a further step of: allowing independent zooming or scrolling of the view of the multimedia document file by the first processing device and the second processing device is enabled.

8. A method of synchronising multimedia content as claimed in Claim 6 or Claim 7, comprising a further step of: allowing independent editing or modification of the multimedia document file by the first processing device and the second processing device and the view of the multimedia document file is synchronised such that the edits or modifications performed at each of the first processing device and the second processing device appear in near real time automatically to the view of the multimedia document file at the first and the second processing devices.

9. A method of synchronising multimedia content as claimed in any one of Claim 3 to Claim 8, in which the first processing devices performs the step of locking and unlocking the view of the multimedia document file.

10. A method of synchronising multimedia content as claimed in any one of the preceding claims, comprising a further step of: saving the edited or modified multimedia document file in one or more of: storage means of the first processing device, the second processing device and remote storage means.

11. A method of synchronising multimedia content as claimed in Claim 10, comprising a further step of: saving the edited or modified multimedia document file in storage means of the first processing device and preventing the edited or modified multimedia document file from being saved in storage means of the or each of second processing device.

12. A method of synchronising multimedia content as claimed in Claim 10 or Claim 11, the first processing devices performs the step of preventing the edited or modified multimedia document file from being saved in storage means of the second processing devices.

13. A method of synchronising multimedia content as claimed in any one of the preceding claims, comprising a further step of: overlaying a device camera on the view of the editable multimedia document file on both the first processing device and the second processing device and providing a channel for a two-way video call between the first processing device and the second processing device during viewing, editing or modification of the multimedia document file.

14. A method of synchronising multimedia content as claimed in any one of the preceding claims, in which the multimedia document file comprises one or both of: image and text content, and the multimedia document file is downloaded to the second processing device in the same file format as provided on the first processing device, and in which the file format of the multimedia document file is at all times the same on all devices when the multimedia document file is modified or edited or saved.

15. A system for synchronising multimedia content across a plurality of devices comprising:
means for allowing a multimedia document file to be viewed on display means of a first processing device;
means for transmitting the multimedia document file to a second processing device for viewing on display means of one or more second processing devices;
means for allowing the multimedia document file to be edited or modified at the first processing device;
the system **characterised by**:
means for synchronising the view of the multimedia document file such that the edits or modifications to the multimedia document file performed at the first processing device appear in near real time automatically at the view of the multimedia document file at the second processing device.
